# EUROPEAN PATENT APPLICATION

(11) **EP 3 273 415 A1**
(43) Date of publication of application: **24.01.2018**
(21) Application number: 17182140.8
(22) Date of filing: 19.07.2017
(51) Int. Cl.: G07C 5/08, G01M 17/00

(54) **VEHICLE MAINTENANCE TOOL AND COMPLAINING METHOD THEREOF**

(30) Priority: 20.07.2016 CN 201610571138
(71) Applicant: Bosch Automotive Service Solutions (Suzhou) Co., Ltd., Suzhou New District VRC-215129 (CN)
(72) Inventor: GUO, Xuefeng, Suzhou, Jiangsu 215129 (CN)
(74) Representative: Bee, Joachim

(57) **Abstract**

The invention provides a vehicle maintenance tool and a complaining method thereof, and a computer module of the vehicle maintenance tool is configured to execute the complaining method. Complaint records and a complaint log are created in the complaining method, and a correlation between the complaint records and the complaint log is saved. Therefore, relevant people can readily obtain a complaint record relevant to the complaint and an associated log so that the fault scenes can be conveniently reproduced. Thereby, the fault of tool can be effectively solved.

## Description

### FIELD OF THE INVENTION

The application relates to maintenance or repair of products, and in particular, to a vehicle maintenance tool and a complaining method thereof.

### BACKGROUND

If faults occur when using products such as vehicle maintenance tools, users generally call a hotline of service center for complaining and asking for help in hope of getting the faults solved. In order to solve these faults, professional technicians have to study log data at the time when product faults occur, with the purpose of finding the cause of fault and thereby seeking for solutions. However, since the professional technicians receive a lot of complaints, it is difficult to remember the details of a certain complaint after receiving several complaints. On the other hand, it is inconvenient to find the log data of a certain complaint from enormous data. Therefore, accurate data typically cannot be found and it is difficult to reproduce the fault scenes in real, and it is also difficult to solve the faults effectively.

Therefore, there is a need for improvement in overcoming the technical problems existing in the prior art.

### SUMMARY OF THE INVENTION

The application mainly aims to solve the problems of maintenance tool faults.

In order to solve the above technical problems, an aspect of the application provides a vehicle maintenance tool complaining method, comprising:
a complaint recording step for establishing complaint records in which contents stated by the user are recorded;
a log obtaining step for automatically obtaining a part of job log of the tool as a complaint log; and
a complaint saving step for saving complaint data which comprises the complaint records, the complaint log and a correlation between the complaint records and the complaint log.

Another aspect of the application provides a vehicle maintenance tool having a computer module which is configured to execute the above described complaining method.

Since the complaining method of the application saves the complaint records and the complaint log as well as the correlation between the complaint records and the complaint log, relevant people can readily obtain a complaint record relevant to the complaint and an associated log so that the fault scenes can be reproduced conveniently. Thereby, the cause of fault can be accurately analyzed, and the fault of tool can be effectively solved.

### BRIEF DESCRIPTION OF THE DRAWINGS

The application will become more fully understood below with reference to the detailed description of the specific embodiments in connection with the accompanying drawings, in which:
Fig. 1 is a schematic view of the vehicle maintenance tool according to a specific embodiment of the application; and
Fig. 2 is a schematic view of the vehicle maintenance tool complaining method according to a specific embodiment of the application.

### DETAILED DESCRIPTION OF THE INVENTION

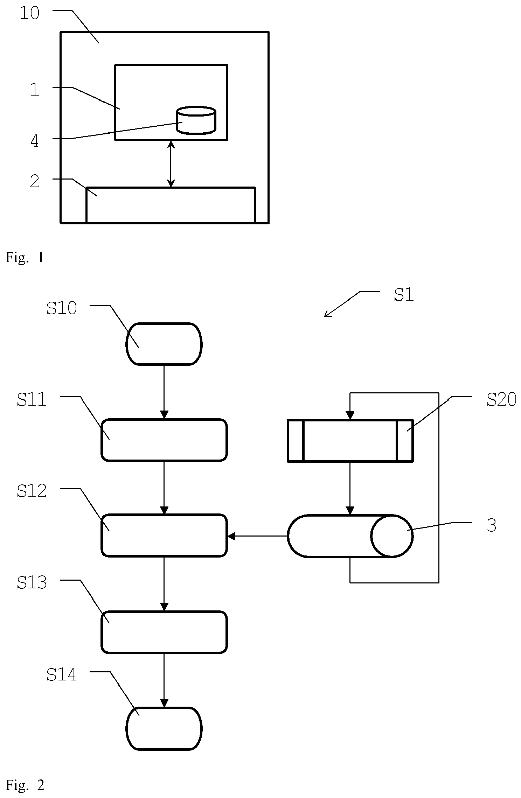

The specific embodiments of the application will be described below with reference to Figs. 1 to 2.

Fig. 1 is a schematic view of vehicle maintenance tool 10, which has a computer module 1 and a maintenance component 2. For example, in a feasible embodiment where the tool 10 is an automobile diagnoser, the maintenance component 2 is a diagnosis interface which can have diagnosis communication with the automobile. The computer module 1 can execute software programs, and has a permanent storage 4 in the illustrated specific embodiment. The computer module 1 is configured to execute the complaining method S1 as shown in Fig. 2.

The vehicle maintenance tool complaining method S1 begins with a start step S10, following which are complaint recording step S11 and log obtaining step S12. The complaint recording step S11 establishes complaint records, and the log obtaining step S12 obtains a complaint log. After establishing the complaint records and obtaining the complaint log, a complaint saving step S13 is executed so as to save complaint data. The complaint data comprises the complaint records, the complaint log and a correlation between the complaint records and the complaint log. While a specific embodiment of the application is described in which the log obtaining step S12 takes place after the complaint recording step S11, those skilled in the art will appreciate that the sequence of executing the complaint recording step S11 and the log obtaining step S12 can have other possibilities. For example, the log obtaining step S12 can take place before the complaint recording step S11, or can also take place concurrently with the complaint recording step S11. All these ways are feasible. After completing necessary processing, the complaining is finished at an end step S 14.

The contents stated by the user can be recorded in the complaint records established in the complaint recording step S11. The contents stated by the user comprise one or more of the forms of text, sound and video. That is, the contents stated by the user can be a text record, or a sound record, or a video record, or a combination of two or more forms of records. The text record can be conveniently edited and stored. However, for the vehicle maintenance tool 10, if user's hands get dirty during maintenance of the vehicle, the sound record is typically more convenient since the dirty hands can be prevented from performing many operations. Thus, conveniences are provided to the user. The video record can further provide scene information that is more real and more complete.

The tool 10 has a log routine S20 that is executed cyclically. The log routine S20 immediately records events that took place in the tool 10 into a job log 3. When the tool 10 is examining and repairing the vehicle, the tool 10 is in communication with the maintenance object, i.e., the vehicle. The contents of the job log 3 comprise the communication data. Checking the job log 3 at the time of the fault is advantageous for reproducing the fault scenes and analyzing the cause of fault. However, the tool 10 typically saves the job log 3 in a permanent way. As time elapses, a very long job log 3 may be accumulated. According to the specific embodiment of the application, the log obtaining step S12 automatically obtains a part of the job log 3 of the tool as a complaint log. For example, the complaint log is the part of the job log 3 that was generated from a certain period of time (e.g., 30 minutes) before the complaining occurred. In a feasible specific embodiment, the tool 10 has a user login function, and the complaint log is the part of the job log 3 that was generated from the last time the user logs in before the complaining occurred. Therefore, the complaint log is typically not as long as the entire job log 3, and it not only occupies less space, but also has a faster speed of transmission. In a feasible specific embodiment, the log routine S20 further has a video recording function, and can record the video of operation process as the job log 3. The video can provide abundant contents so as to assist the technicians in understanding the operation process. However, the video recording function consumes more resources. In a feasible specific embodiment, the video is recorded from when the user selects a specific vehicle system for diagnosis, and only the latest video having a specified length is saved. That is, the recorded video has a length that is no more than the specified length (e.g., 5 minutes), and when the specified length is exceeded, the old video will be discarded, and the latest video having the specified length is saved.

The complaining method S1 comprises an online complaining mode, or also an offline complaining mode.

In the online complaining mode, a step (not shown) of establishing a remote communicative connection between the tool and the server is included, and the complaint saving step S13 comprises saving the complaint data in a way of uploading it to the server. That is, the complaint saving step S13 uploads the complaint data to the server without going through the process of saving the complaint data in the local permanent storage 4. In a feasible specific embodiment, the remote communicative connection between the tool and the server is established before the complaint recording step S11. The complaint recording step S11 further comprises obtaining guidance service from the server, and creating the complaint records according to the guidance service. Therefore, complaint recordings having a high quality can be created. Herein, the guidance service can be artificial guidance. For example, the user can be connected to the service desk via speech so that the service personnel can provide direct guidance service. Thereby, the user can obtain highly humanized service, and can handle various complicated situations with the appropriate guidance he/she was given; herein, the guidance service can also be automatic machine guidance. For example, the machine can inform the user of the contents that need to be described according to the type of user's complaint, and can even conduct automatic verification on the contents.

In the offline complaining mode, the complaint saving step S13 comprises firstly saving the complaint data in the local permanent storage 4 of the tool. In a situation where the communication between the tool and the server has been established, the complaint data in the permanent storage 4 is then uploaded to the server. Therefore, the tool 10 not only can be complained for online at places such as a workstation with network connection, but also can be complained for offline at desolate places without network connection. The data of offline complaint is saved locally, and can be uploaded where there is network connection. In a feasible specific embodiment of offline complaining mode, the complaint log is saved in a way of saving a log label. That is, only the information on the position of the complaint log in the job log 3 is required to be saved, and when necessary, the contents of the complaint log can be retrieved from a corresponding position in the job log 3 according to the log label.

Feasibly, the tool 10 further comprises a complaint retrieving step (not shown), in which the complaint log is found from the complaint records according to the correlation, or the complaint records are found from the complaint log according to the correlation. This is advantageous for personnel who provide technical support service for the tool since they can combine events at the time of the fault described by the complaint record and the fault recorded by the complaint log so as to reasonably reproduce the scenes of faults and analyze the cause of faults, thus facilitating finding a repairing solution.

The above specific embodiments are merely provided for illustrating the application, and are intended to limit the application. Those with ordinary skills in the art will can also make many modifications and variations without departing from the scope of protection of the application. Therefore, all the equivalent technical solutions will also fall within the scope of the application which is defined by the appended claims.

## Claims

1. A vehicle maintenance tool complaining method (S1), **characterized by** comprising:
a complaint recording step (S11) for establishing complaint records in which contents stated by the user are recorded;
a log obtaining step (S12) for automatically obtaining a part of job log (3) of the tool as a complaint log; and
a complaint saving step (S13) for saving complaint data which comprises the complaint records, the complaint log and a correlation between the complaint records and the complaint log.

2. The method (S1) according to claim 1, comprising an online complaining mode, wherein the complaint saving step (S13) comprises saving the complaint data in a way of uploading it to the server.

3. The method (S1) according to claim 1, comprising an offline complaining mode, wherein the complaint saving step (S13) comprises saving the complaint data in a local permanent storage (4) of the tool.

4. The method (S1) according to claim 3, wherein in a situation where the communication between the tool and the server has been established, the complaint data in the permanent storage (4) is uploaded to the server.

5. The method (S1) according to claim 2, wherein the online complaining mode further comprises establishing a remote communicative connection between the tool and the server, and the complaint recording step (S11) further comprises obtaining guidance service from the server, and creating the complaint records according to the guidance service.

6. The method (S1) according to any of claims 1 to 5, wherein the complaint log is the part of the job log (3) that was generated from a certain period of time before the complaining occurred, the complaint log comprises communication data, or a video of operation process, and the communication data records the communication between the tool and the maintenance object.

7. The method (S1) according to any of claims 1 to 5, wherein the tool has a user login function, and the complaint log is the part of the job log (3) that was generated from the last time the user logs in before the complaining occurred.

8. The method (S1) according to any of claims 1 to 5, further comprising a complaint retrieving step, in which the complaint log is found from the complaint records according to the correlation, or the complaint records are found from the complaint log according to the correlation.

9. The method (S1) according to any of claims 1 to 5, wherein the contents stated by the user comprise one or more of the forms of text, sound and video.

10. A vehicle maintenance tool (10) having a computer module (1), **characterized in that** the computer module is configured to execute the method (S1) according to any of claims 1 to 9.
